# EUROPEAN PATENT SPECIFICATION

(11) **EP 2 786 073 B1**
(45) Date of publication and mention of the grant of the patent: **29.05.2019**
(21) Application number: 12821033.3
(22) Date of filing: 26.11.2012
(51) Int. Cl.: F23K 5/00, F23N 1/00, F16K 3/08, F16K 11/074

(54) **ELECTRICALLY CONTROLLED GAS REGULATING VALVE FOR A GAS STOVE**
ELEKTRISCH GESTEUERTES GASREGELVENTIL FÜR EINEN GASHERD
VANNE RÉGULATRICE DE GAZ À COMMANDE ÉLECTRIQUE POUR UNE CUISINIÈRE À GAZ

(30) Priority: 28.11.2011 CN 201110396346
(43) Date of publication of application: 08.10.2014
(73) Proprietor: BSH Hausgeräte GmbH, 81739 München (DE)
(72) Inventor: WU, Jinhua, Jiangsu 210000 (CN); REDONDO MORITZ, Jose, Guarnizo-El Astillero 396110 (ES); LI, Xingzhou, Jiangsu 210000 (CN)
(86) International application number: PCT/IB2012/056727
(87) International publication number: WO 2013/080116

(56) References cited:
- EP-A2- 2 299 156
- WO-A2-2006/090271
- GB-A- 662 896
- JP-A- S5 572 958
- JP-A- 2003 222 327
- US-A- 3 014 489
- US-A- 3 146 794
- US-A- 3 443 592

## Description

### BACKGROUND OF THE INVENTION

### Field of Invention

The present invention relates to the field of gas stove technologies, and in particular to a gas regulating valve used in a gas stove, a gas stove including the regulating valve, an electrically controlled gas regulating valve used in a gas stove, and a gas stove including the electrically controlled gas regulating valve.

### Related Art

In an existing gas stove, the fire size is generally controlled through a plug valve. The control principle is to control the gas flow that passes through the plug valve, thereby controlling the fire size. The plug valve includes a valve body and a valve core, and the valve body is fit with the valve core through a cock hole provided on the valve body. A gas inlet and a gas outlet pipe are further provided on the valve body. The cross section of the valve core is generally cylindrical or tapered. A gas outlet hole is axially provided on the valve core; when the valve core is rotated by different angles, the communication degree between the gas inlet and the gas outlet hole varies, so as to control the gas flow in the gas outlet pipe. For more technical details, refer to the invention patent with Publication No. CN 102052485A and entitled "STEPLESS-ADJUSTABLE ELECTRICALLY CONTROLLED GAS VALVE".

However, in practical production, the inventors find that, the structure of such a plug valve is inconvenient to process, leading to the high cost. As a result, it is difficult to popularize gas stoves provided with such plug valves on the market. Moreover, it is difficult to achieve an even change of gas flow corresponding to different control grades through the plug valve.

JP S55 72958 A describes an operating device for a gas apparatus. The device comprises a valve body and a rotary plate being arranged in a cavity of the valve body. The rotary plate can be rotated by means of an operation shaft.

In view of this, it is necessary to provide a novel gas regulating valve used in a gas stove, so as to overcome the defects in the prior art.

### SUMMARY OF THE INVENTION

The present invention is directed to a gas regulating valve for a gas stove, so as to solve the problem of inconvenient processing and high cost of the plug valve for the existing gas stove in the prior. The invention is a gas regulating valve for a gas stove according to claim 1.

To solve the foregoing problem, the present invention provides a gas regulating valve for a gas stove, including:
a valve body, including an inner cavity and provided with a gas inlet and a gas outlet;
a rotating disk, in plane contact with a surface of the inner cavity of the valve body and capable of rotating relative to the surface of the inner cavity of the valve body, in which a contact surface of the rotating disk and that of the valve body are fitted in a sealed manner; and the rotating disk has a connection channel capable of selectively connecting or disconnecting the gas outlet on the valve body and the inner cavity of the valve body or changing a communication degree therebetween when the rotating disk rotates;
a rotating shaft for driving the rotating disk to rotate;
an elastic element for pressing the rotating disk flat on the surface of the inner cavity of the valve body, and the elastic element is sleeved on the rotating shaft; and
a thrust bearing adhered to the rotating disk, and the thrust bearing is sleeved on a terminal of the rotating shaft and leans against one end of the elastic element.

The gas outlet includes a first gas outlet and a second gas outlet with different distances to a rotation center of the rotating disk; and the connection channel includes a first connection channel corresponding to the first gas outlet and a second connection channel corresponding to the second gas outlet.

Optionally, the size of the second gas outlet is smaller than that of the first gas outlet.

The valve body is further provided with a minimum burner gas inlet adapted to be in communication with the second gas outlet; the rotating disk is further provided with a third connection channel corresponding to the minimum burner gas inlet; and when the third connection channel communicates with the minimum burner gas inlet, neither first gas outlet nor second gas outlet communicates with the inner cavity of the valve body.

Optionally, a distance from the rotation center of the rotating disk to the first gas outlet is equal to that to the minimum burner gas inlet, and the third connection channel is the first connection channel.

Optionally, a flow regulating device is further disposed on the valve body, and the flow regulating device is capable of selectively connecting or disconnecting the second gas outlet and the minimum burner gas inlet or changing a communication degree therebetween.

Optionally, the flow regulating device is a screw. A channel for receiving the screw intersects the minimum burner gas inlet. A communication hole is provided on the screw, and when the third connection channel communicates with the minimum burner gas inlet, gas flows toward the second gas outlet through the communication hole.

Optionally, the gas regulating valve further includes a first seal ring, disposed on the channel for receiving the screw and a mounting face of the screw.

Optionally, at least two first connection channels with different sizes are provided and are arranged in a size descending order or a size ascending order along a rotation direction of the rotating disk; and at least two second connection channels are also provided.

Optionally, the first connection channel and the second connection channel are arranged such that when the rotating disk rotates in one direction, communication degrees, corresponding to successive grades, between the first gas outlet and the inner cavity, and between the second gas outlet and the inner cavity are increased evenly or decreased evenly.

Optionally, the communication degree between the first gas outlet and the inner cavity, and the communication degree between the second gas outlet and the inner cavity are as follows: when the rotating disk rotates in one direction, multiple first connection channels with descending sizes successively communicate with the first gas outlet; then, the first connection channels do not communicate with the first gas outlet, and the multiple second connection channels with descending sizes successively communicate with the second gas outlet.

Optionally, the connection channel is a hole in any one of the following shapes: a circle, an ellipse, a rhombus, a rectangle, and a regular polygon.

Optionally, when the rotating disk rotates in one direction, communication degrees, corresponding to the successive grades, between the gas outlet and the inner cavity are increased evenly or decreased evenly.

The gas regulating valve for a gas stove further includes a rotating shaft for driving the rotating disk to rotate.

The gas regulating valve for a gas stove further includes an elastic element for pressing the rotating disk flat on the surface of the inner cavity of the valve body, and the elastic element is sleeved on the rotating shaft.

The gas regulating valve for a gas stove further includes a thrust bearing adhered to the rotating disk, and the thrust bearing is sleeved on a terminal of the rotating shaft and leans against one end of the elastic element.

Optionally, the valve body includes a top cover and a valve main body, the top cover and the valve main body form a sealed cavity, and the gas inlet is provided on the top cover.

Optionally, the gas regulating valve for a gas stove further includes a second seal ring disposed on the top cover and a mounting face of the valve body.

A gas stove is further provided, including the above gas regulating valve for a gas stove.

An electrically controlled gas regulating valve for a gas stove is further provided, including:
the above gas regulating valve for a gas stove; anda motor for driving the rotating disk.

Optionally, a motor output shaft is disposed on the motor. Teeth are provided on an edge of the rotating disk. The motor output shaft is connected to a gear, and the gear is engaged with the teeth at the edge of the rotating disk.

A gas stove is further provided, including the above electrically controlled gas regulating valve for a gas stove.

Compared with the prior art, the present invention has the following advantages: the rotating disk is pressed flat on the surface of the inner cavity of the valve body, so that the inner cavity of the valve body in communication with the gas inlet is spaced from the gas outlet; the inner cavity selectively communicates with the gas outlet through the connection channel provided on the rotating disk. When the rotating disk rotates relative to the surface of the inner cavity of the valve body, the connection channel may not align with, partially align with, or completely align with the gas outlet, thereby achieving segmented control over the flow at the gas outlet.

Furthermore, two gas outputs exist, which are respectively a first gas outlet and a second gas outlet with different distances to the rotation center of the rotating disk; correspondingly, two connection channels exist, which are respectively a first connection channel corresponding to the first gas outlet and a second connection channel corresponding to the second gas outlet. When the two gas outlets are, for example, an outer ring burner gas outlet and an inner ring burner gas outlet, different communication degrees between the two gas outlets and the two connection channels may form multiple combinations, so as to control the gas flow at multiple grades.

Furthermore, the valve body is further provided with a minimum burner gas inlet in communication with the second gas outlet. The rotating disk is further provided with a third connection channel corresponding to the minimum burner gas inlet, and when the third connection channel communicates with the minimum burner gas inlet, neither first gas outlet nor second gas outlet communicates with the inner cavity of the valve body, so as to meet a demand for small burner when a gas stove is in use.

Furthermore, a flow regulating device is further disposed on the valve body, and the flow regulating device is capable of selectively connecting or disconnecting the second gas outlet and the minimum burner gas inlet or changing a communication degree therebetween, so that the gas stove can achieve small fire with different gas sources.

Furthermore, in order to improve the precision of segmented control over the gas flow of the gas stove at multiple grades, the communication degree between the first gas outlet and the inner cavity, and the communication degree between the second gas outlet and the inner cavity are as follows: when the rotating disk rotates in one direction, the multiple first connection channels with descending sizes successively communicate with the first gas outlet; then, the first connection channels do not communicate with the first gas outlet, and the multiple second connection channels with descending sizes successively communicate with the second gas outlet.

### BRIEF DESCRIPTION OF THE DRAWINGS

FIG. 1 is a schematic three-dimensional structural view of an electrically controlled gas regulating valve used in a gas stove according to an embodiment of the present invention;
FIG. 2 is a sectional structural view of FIG. 1;
FIG. 3 is an amplified structural view of a rotating disk;
FIG. 4 and FIG. 5 are amplified structural views showing a procedure of regulating flow through a screw;
FIG. 6 is a schematic structural view of a rotating disk provided in an embodiment of the present invention;
FIG. 7 is a schematic structural view of a rotating disk;
FIG. 8 is a schematic structural view of a rotating disk provided in an embodiment of the present invention;
FIG. 9 is a schematic view showing a communication relationship between a first gas outlet and an inner cavity of a valve body, and a communication relationship between a second gas outlet and the inner cavity of the valve body during a rotation procedure of the rotating disk according to an embodiment of the present invention;
FIG. 10 is a view showing a relationship between gas power and different grades during a rotation procedure of the rotating disk according to an embodiment of the present invention;
FIG. 11 is a schematic structural view of a rotating disk provided in an embodiment of the present invention;
FIG. 12 is a schematic view showing a communication relationship between a first gas outlet and an inner cavity of a valve body, and a communication relationship between a second gas outlet and the inner cavity of the valve body during a rotation procedure of the rotating disk according to an embodiment of the present invention; and
FIG. 13 is a view showing a relationship between gas power and different grades during a rotation procedure of the rotating disk according to an embodiment of the present invention.

### DETAILED DESCRIPTION OF THE INVENTION

In the present invention, a rotating disk is pressed flat on a surface of an inner cavity of a valve body, so that the inner cavity of the valve body in communication with a gas inlet is spaced from a gas outlet. Selective communication between the two separated spaces is implemented through a connection channel provided on the rotating disk. When the rotating disk rotates relative to the surface of the inner cavity of the valve body, the connection channel may not align with, partially align with, or completely align with the gas outlet, so as to control flow of gas at the gas outlet.

To make the objectives, features, and advantages of the present invention more comprehensible, the specific embodiments of the present invention are described in detail below with reference to the accompanying drawings. The present invention emphasizes the illustration of the principle, so the figures are not drawn in proportion.

For ease of understanding of the technical solutions of the present invention, the numerals in the accompanying drawings mentioned in the specific embodiments are listed below.
Valve body 11 Second gas outlet 1122
Gas inlet 111 First connection channel 1211
Rotating disk 12 Second connection channel 1212
Connection channel 121 Outer ring burner joint 23
Top cover 113 Inner ring burner joint 24
Mounting screw 19 Minimum burner gas inlet 1123
Second seal ring 20 Third connection channel 1213
Motor 15 Screw 13
Motor output shaft 151 Communication hole 131
Rotating shaft 122 Screw bolt 132
Third seal ring 21 Screw stem 133
Pressure spring 18 Bore 1311
Thrust bearing 22 Through hole 1312
First gas outlet 1121 First seal ring 14

### Embodiment 1

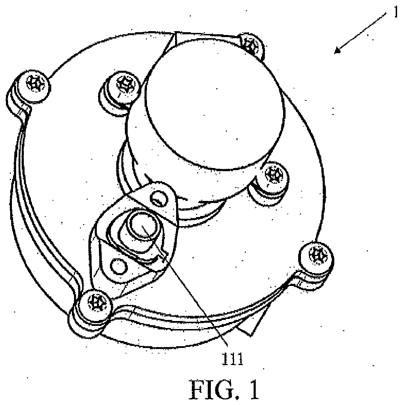

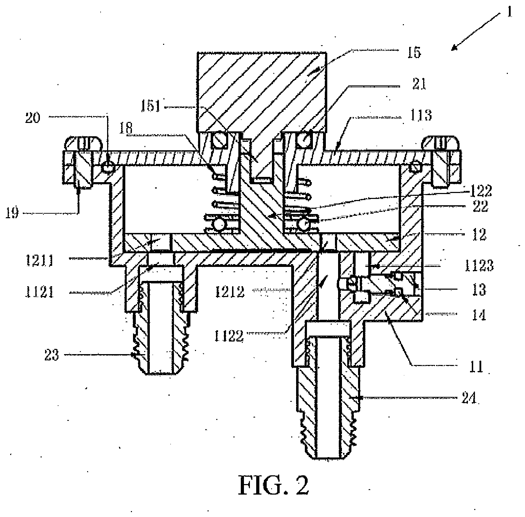

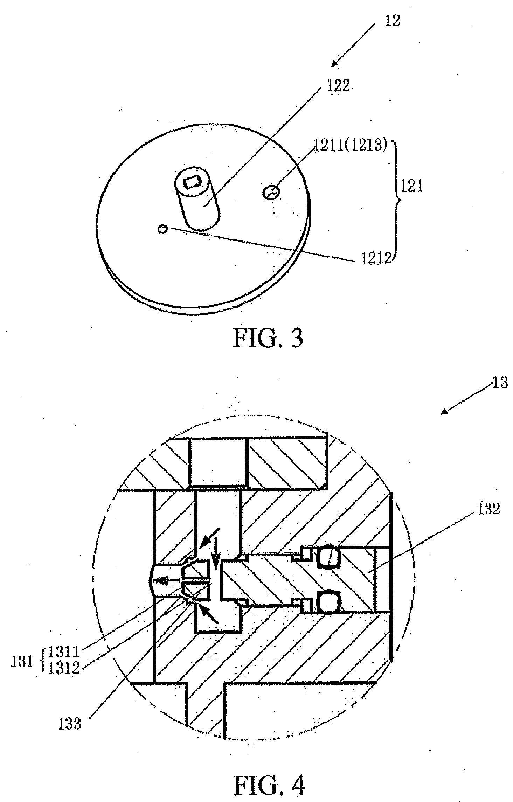

FIG. 1 is a schematic three-dimensional structural view of an electrically controlled gas regulating valve 1 used in a gas stove according to Embodiment 1 of the present invention; FIG. 2 is a sectional structural view of FIG. 1; and FIG. 3 is a schematic structural view of a rotating disk.

Referring to FIG. 1 and FIG. 2, the regulating valve 1 includes:
a valve body 11, including an inner cavity and provided with a gas inlet 111 and a gas outlet; and
a rotating disk 12, in plane contact with a surface of the inner cavity of the valve body 11 and capable of rotating relative to the surface of the inner cavity of the valve body 11, in which a contact surface of the valve body 11 and that of the rotating disk 12 are fitted in a sealed manner; and the rotating disk 12 has a connection channel 121 capable of selectively connecting or disconnecting the gas outlet on the valve body 11 and the inner cavity of the valve body 11 or changing a communication degree therebetween when the rotating disk 12 rotates (as shown in FIG. 3).

It can be seen that, in the regulating valve 1, the rotating disk 12 is pressed flat on the surface of the inner cavity of the valve body 11, so that the inner cavity of the valve body in communication with the gas inlet 111 is spaced from the gas outlet. Selective communication between the two separated spaces is implemented through a connection channel 121 provided on the rotating disk 12. When the rotating disk 12 rotates relative to the surface of the inner cavity of the valve body 11, the connection channel 121 may not align with (without any overlapping area), partially align with (partial overlapping area), or completely align with (the overlapping area is the largest) the gas outlet, so as to achieve different communication degrees between the inner cavity and the gas outlet, thereby controlling gas flow at the gas outlet, and achieving segmented control over the gas flow.

In this embodiment, the connection channel 121 is a hole in any one of the following shapes: a circle, an ellipse, a rhombus, a rectangle, and a regular polygon.

Through opening a hole on the rotating disk 12 according to the present invention, it is avoided to use a plug valve for which a hole needs to be axially opened on a cylinder or on a side surface of a cone, thereby lowering the processing difficulty and reducing the cost of the regulating valve.

As shown in FIG. 2, the inner cavity of the valve body 11 is formed by a valve main body (not marked) and a top cover 113, and the top cover 113 is fixed on the valve main body through a mounting screw 19. In addition, the gas inlet 111 (referring to FIG. 1) is provided on the top cover 113. To improve a sealing effect between the valve main body and the top cover 113, a second seal ring 20 is disposed on a contact surface of the valve main body and the top cover 113. In this embodiment, the top cover 113 and the valve main body are integrally formed, and the whole body is referred to as the valve body 11. In other embodiments, the top cover 113 may also be construed as a part out of the valve body 11.

In this embodiment, the regulating valve 1 is an electrically controlled gas regulating valve. Therefore, the regulating valve 1 further needs to be used in coordination with a motor 15. As shown in FIG. 2, the motor 15 includes a motor output shaft 151. The motor output shaft 151 stretches into the inner cavity through a hole opened on the top cover 113 and is fixedly connected to a rotating shaft 122 for driving the rotating disk 12 to rotate, so as to directly drive the rotating shaft 122 to rotate, thereby directly driving the rotating disk 12 to rotate.

In other embodiments, the motor 15 may also indirectly drive the rotating disk 12. Specifically, an edge of the rotating disk 12 is provided with teeth (not shown), the motor output shaft 151 is connected to a gear (not shown), and the gear is engaged with the teeth at the edge of the rotating disk, thereby driving the rotating disk 12 to rotate.

To prevent gas from leaking through the hole opened on the top cover 113, a second seal ring 21 is disposed between the motor output shaft 151 and the hole.

Still, referring to FIG. 2, the regulating valve 1 further includes: a pressure spring 18 for pressing the rotating disk 12 flat on the surface of the inner cavity of the valve body 11, and a thrust bearing 22 adhered to the rotating disk 12. The pressure spring 18 is sleeved on the rotating shaft 122, one end of the pressure spring leans against an inner surface of the top cover 113, and the other end thereof leans against the thrust bearing 22 sleeved on a terminal of the rotating shaft 122. The thrust bearing 22 generally includes at least two gaskets. In this embodiment, the thrust bearing 22 includes two gaskets. In each gasket, one surface is flat and the other surface is provided with a structure fit with roll balls. In this embodiment, the spring 18 is pressed against the flat surface of one gasket, and the flat surface of the other gasket is pressed against the rotating disk 12. Since the pressure spring 18 is pressed against the rotating disk 12, the rotating disk 12 is closely adhered to the valve body 11, thereby avoiding gas leakage. The thrust bearing 22 acts on the rotating disk 12, which can reduce friction between the pressure spring 18 and the rotating disk 12, so that the motor 15 drives the rotating disk 12 more easily. It can be understood that, the pressure spring 18 can be replaced by other elastic elements, and the thrust bearing 22 may also be replaced by other elements for reducing friction.

Referring to FIG. 2 and FIG. 3, in this embodiment, the gas outlet includes a first gas outlet 1121 and a second gas outlet 1122 with different distances to a rotation center of the rotating disk 12. The rotation center herein is a position where the rotating shaft 122 for driving the rotating disk 12 to rotate is disposed. The rotating shaft 122 is perpendicular to a surface of the rotating disk 12. In this embodiment, the rotating disk 12 is a symmetrical disk, and the rotation center is the center of symmetry when the disk rotates. In addition, correspondingly, the connection channel 121 is provided with a first connection channel 1211 corresponding to the first gas outlet 1121 and a second connection channel 1212 corresponding to the second gas outlet 1122. In a rotation procedure of the rotating disk 12, the inner cavity and the first gas outlet 112, as well as the inner cavity and the second gas outlet are selectively connected or disconnected, or a communication degree therebetween is changed, thereby controlling flow of the gas that flows from the inner cavity to the two gas outlets 1121 and 1122, and finally implementing segmented control over the gas supplied through the two gas outlets 1121 and 1122 to an outer ring burner joint 23 and an inner ring burner joint 24 respectively.

When the regulating valve 1 provided in this embodiment is applied to an existing gas stove, the two gas outlets 1121 and 1122 may be respectively an outer ring burner gas outlet and an inner ring burner gas outlet. The outer ring burner gas outlet and the inner ring burner gas outlet are respectively connected to the outer ring burner joint 23 and the inner ring burner joint 24. Generally, the outer ring burner gas outlet is larger than the inner ring burner gas outlet. Different communication degrees between the two gas outlets 1121 and 1122 and the two connection channels 1211 and 1212 may form different combinations, so as to control gas flow of the gas stove at multiple grades. The grades herein are divided according to a total of communication degrees between the inner cavity and the first connection channel 1211 as well as the second connection channel 1212, namely, segments in the segmented flow control.

Referring to FIG. 2 and FIG. 3, to meet a demand for a minimum fire in use of the gas stove, the valve body 11 is further provided with a minimum burner gas inlet 1123 adapted to be in communication with the second gas outlet 1122, and the rotating disk 12 is further provided with a third connection channel 1213 corresponding to the minimum burner gas inlet 1123. Meanwhile, when the third connection channel 1213 communicates with the minimum burner gas inlet 1123, neither first gas outlet 1121 nor second gas outlet 1122communicates with the inner cavity 11 of the valve body 11, so as to ensure that the gas flow to the minimum burner is lower than that to the inner ring burner and the outer ring burner.

It should be noted that, the term "adapted" herein means that, when the user needs to use the minimum burner, the second gas outlet 1122 communicates with the minimum burner gas inlet 1123; otherwise, the second gas outlet 1122 does not communicate with the minimum burner gas inlet 1123.

In this embodiment, a working procedure of supplying gas for the minimum burner gas inlet 1123 is as follows: the rotating disk 12 rotates such that the second connection channel 1212 does not overlap (does not align with) the second gas outlet 1122, and that the third connection channel 1213 completely aligns with the minimum burner gas inlet 1123, that is, gas only enters the minimum burner gas inlet 1123 through the third connection channel 1213 from the inner cavity of the valve body 11, and then flows to the second gas outlet 1122; at this time, the gas flow at the minimum burner gas inlet 1123 is highest.

As the rotating disk 12 rotates, the second connection channel 1212 does not overlap the second gas outlet 1122, and the third connection channel 1213 partially overlaps (partially aligns with) the minimum burner gas inlet 1123, that is, the gas only enters the minimum burner gas inlet 1123 through the third connection channel 1213 from the inner cavity of the valve body 11, and then flows to the second gas outlet 1122. Through different rotation angles of the rotating disk 12, segmented control between a maximum value and a minimum value of the gas flow at the minimum burner gas inlet 1123 can be realized.

As the rotating disk 12 continuously rotates, the third connection channel 1213 does not overlap (does not align with) the minimum burner gas inlet 1123, and no gas flows to the second gas outlet 1122 through the minimum burner gas inlet 1123. At this time, the gas flow at the minimum burner gas inlet 1123 is the lowest.

To achieve minimum fire at different stoves, the minimum burner gas inlet 1123 needs further flow control. In this embodiment, the gas flow is controlled through a flow regulating device, specifically, a screw 13. The valve body 11 is provided with a channel for receiving the screw 13, and the channel intersects the minimum burner gas inlet 1123. The screw 13 is provided with a communication hole 131 (as shown in FIG. 4). When the third connection channel 1213 communicates with the minimum burner gas inlet 1123, the gas flows toward the second gas outlet 1122 through the communication hole 131.

FIG. 4 is an amplified structural view of the screw 13. Referring to FIG. 4, the screw 13 includes a screw bolt 132 with a large sectional area and a screw stem 133 with a small sectional area. A bore 1311 is axially opened on the screw stem 133 inwards from a tip end, and a through hole 1312 is opened on a side surface of the screw stem 133. The through hole 1312 is screwed into or screwed out of the valve body 11 with the screw 13, and is in communication with the bore 1311, so as to form the communication hole 131.

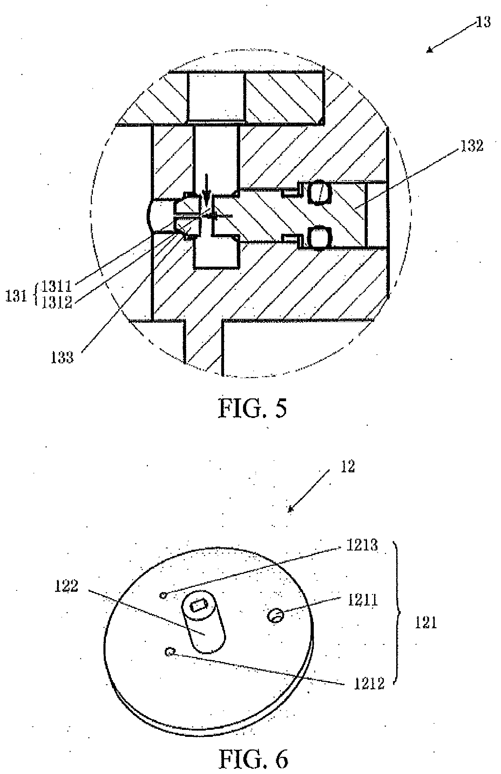

During the specific implementation procedure, referring to FIG. 4, a wedge-shaped structure is formed at a free end of the screw stem 133, and when the screw 13 is screwed into the valve body 11 a little, the wedge-shaped structure at the free end of the screw stem 133 does not enter the channel for receiving the screw. In other words, the free end of the screw stem 133 and the channel for receiving the screw form a gas channel, and as the screw 13 is gradually screwed into the valve body 11, less and less gas flows through the gas channel. In this procedure, the communication hole 131 merely passes the gas and does not regulate the flow. As the screw 13 is more deeply screwed into the valve body 11, specifically, the screw 13 is screwed to a position shown in FIG. 5, the wedge-shaped structure leans against the channel for receiving the screw and cuts off the previous gas channel. At this time, the communication hole 131 merely passes the gas, and when the screw 13 is at this position, the screw 13 does not function to regulate the flow any more.

To sum up, the screw 13 can change the communication degree between the second gas outlet 1122 and the minimum burner gas inlet 1123.

Further referring to FIG. 2 and FIG. 4, to prevent gas leakage at the screw channel, a first seal ring 14 is further disposed on the channel for receiving the screw 13 and a mounting face of the screw 13. The mounting face of the screw 13 refers to a contact surface of the screw bolt 132 and the channel for receiving the screw 13, such that the first seal ring 14 is prevented from being taken to the second gas outlet 1122 when the screw 13 is screwed into or screwed out of the valve body.

In other embodiments, another device capable of regulating the flow can also be selected in addition to the screw 13, as long as the device can selectively connect or disconnect the second gas outlet 1122 and the minimum burner gas inlet 1123 or change the communication degree therebetween.

In this embodiment, a distance from the rotation center of the rotating disk 12 to the first gas outlet 1121 is equal to that to the minimum burner gas inlet 1123, and the first connection channel 1211 serves as the third connection channel 1213, so that the number of holes to be opened on the rotating disk 12 is reduced and that neither first gas outlet 1121 nor second gas outlet 1122 communicates with the inner cavity of the valve body 11 when the third connection channel 1213 communicates with the minimum burner gas inlet 1123.

In a gas stove only having an inner ring burner and an outer ring burner and not having a minimum burner gas inlet, the structure of the rotating disk 12 is also as shown in FIG. 3. The size of overlapping areas between the first gas outlet 1121 and the first connection channel 1211, and between the second gas outlet 1122 and the second connection channel 1212 can change the communication degree between the gas outlet 1121 and the inner cavity of the valve body 11, and the communication degree between the gas outlet 1122 and the inner cavity of the valve body 11, thereby achieving segmented control over the gas flow.

Moreover, the gas regulating valve 1 provided in this embodiment is electrically controlled. If the motor 15 is replaced by a knob, the rotating shaft 122 stretches out of the cover body 113 and is fixed with the knob; then, the gas regulating valve can be manually controlled.

In addition to the electrically controlled gas regulating valve 1 described above, this embodiment further provides a gas stove, which includes the electrically controlled gas regulating valve 1 or a gas regulating valve manually operated by the user.

### Embodiment 2

The difference between this embodiment and Embodiment 1 lies in that, in a gas regulating valve provided in this embodiment, a distance from a rotation center of a rotating disk 12 to the first gas outlet 1121 is not equal to that to the minimum burner gas inlet 1123. For such a design, a structure of the rotating disk 12 provided in this embodiment is shown in FIG. 6, with reference to FIG. 2, a distance from the rotation center of the rotating disk 12 to the first connection channel 1211 is not equal to that to the third connection channel 1213. During a rotation procedure of the rotating disk 12, the size of the overlapping areas between the first gas outlet 1121 and the first connection channel 1211, between the second gas outlet 1122 and the second connection channel 1212, and between the minimum burner gas inlet 1123 and the third connection channel 1213 can change the communication degree between the gas outlet 1121 and the inner cavity of the valve body 11, and the communication degree between the gas outlet 1122 and the inner cavity of the valve body 11, thereby achieving segmented control over the gas flow. In a processing procedure, since the third connection channel 1213 is not in the same circle with the first connection channel 1211, it is required to re-determine a central position for opening a hole.

### Embodiment 4

Compared with the regulating valve provided in Embodiment 1, a gas regulating valve provided in this embodiment can improve the precision of control over the gas flow of a gas stove at multiple grades. This objective is mainly achieved through providing a first connection channel 1211 and a second connection channel 1212 on a rotating disk 12.

Taking seven grades X1 to X7 as an example, a working procedure of the regulating valve provided in this embodiment is specifically introduced. Apart from a total of communication degrees between the inner cavity and the first connection channel 1211 as well as the second connection channel 1212, more specifically, the grade herein refers to a total of communication degrees between the first connection channel 1211 and the inner cavity of the valve body 11, and between the second connection channel 1212 and the inner cavity of the valve body 11 when the first connection channel 1211 completely aligns with (the overlapping area is the largest) the first gas outlet 1121 and the second connection channel 1212 completely aligns with (the overlapping area is the largest) the second gas outlet 1122. It should be noted that, the gas regulating valve provided in this embodiment is an improved solution based on the gas regulation valve 1 provided in Embodiment 1. Therefore, each component is identified by the same numeral as in Embodiment 1 unless otherwise specified.

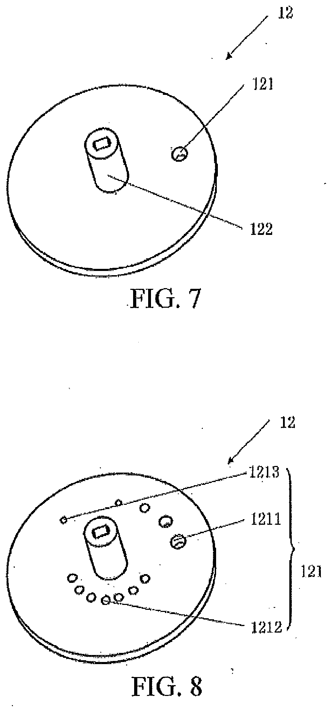

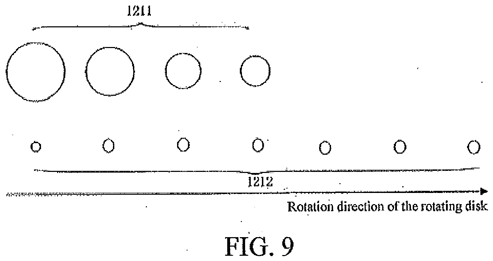

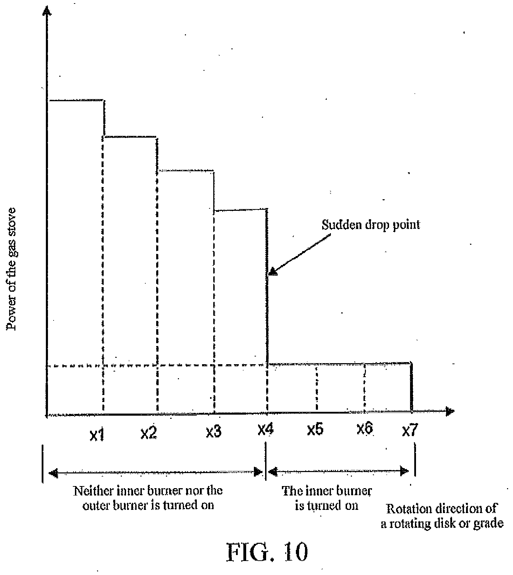

In the structure of the rotating disk shown in FIG. 8, four first connection channels 1211 with different sizes may be provided, and are arranged in a size descending order or a size ascending order along a rotation direction of the rotating disk 12. Seven second connection channels 1212 with the same size may be provided. As shown in FIG. 9, the first connection channel 1211 and the second connection channel 1212 are arranged such that when the rotating disk 12 rotates in one direction, the four first connection channels 1211 arranged in a size descending order successively communicate with the first gas outlet 1121 (the outer ring burner). Then, the first connection channels 1211 do not communicate with the first gas outlet 1121 (the outer ring burner), and the remaining three second connection channels 1212 successively communicate with the second gas outlet 1122 (the inner ring burner). In the foregoing procedure, the gas power corresponding to the grades X1 to X7 is gradually reduced, as shown in FIG. 10, substantially achieving evenly segmented control over the gas flow. It can be understood that, when the rotating disk 12 rotates in one direction, the gas power corresponding to the grades is gradually increased. Here, the evenly segmented control refers to that, corresponding to each grade, a difference between the total gas flow at the first gas outlet 1121 and the total gas flow at the second gas outlet 1122 fluctuates within a certain range, such as 15% to 20%, around a reference value.

It should be noted that, when the first connection channel 1211 communicates with the first gas outlet 1121 (the outer ring burner), the second connection channel 1212 also communicates with the second gas outlet 1122 (the inner ring burner). However, in a gas stove, generally, the outer ring burner is far larger than the inner ring burner, so the communication between the second connection channel 1212 and the second gas outlet 1122 (the inner ring burner) is not mandatory. In other words, in this embodiment, at the grades X1 to X4, the inner ring burner and the outer ring burner are turned on at the same time. At the grades X5 to X7, only the inner ring burner is turned on. In other embodiments, at the grades X1 to X4, only the outer ring burner is turned on. At the grades X5 to X7, only the inner ring burner is turned on.

### Embodiment 5

Compared with Embodiment 4, this embodiment can further improve the precision of control over the gas flow of a gas stove at multiple grades. This objective is also mainly achieved through a first connection channel 1211 and a second connection channel 1212 provided on a rotating disk 12.

It can be seen from FIG. 10 that, in a switch between X4 and X5, that is, when a switch is performed between two grades of the inner ring burner in work while the outer ring burner is not working, the gas flow is sharply reduced, resulting in a sudden drop of the power of the gas stove. To solve the problem of the sudden drop of the power, it is generally considered that the power of the inner ring burner needs to be increased. However, simply to increase the power of the inner ring burner may cause the amount of CO to exceed the standard, and cause harm to the user.

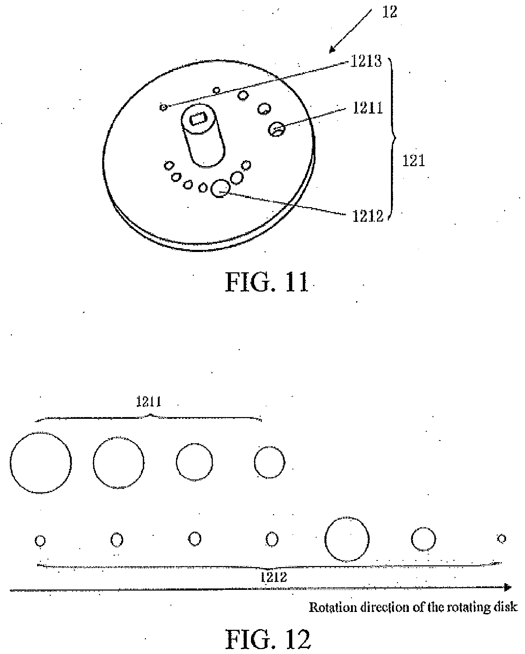

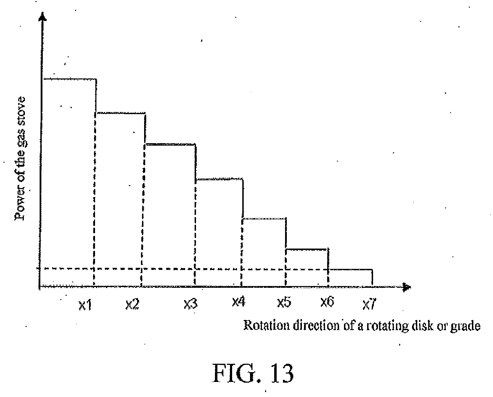

Through analysis, the inventors find that the sudden drop of the power is caused by an excessively small size of the second gas outlet 1122 (the inner ring burner) in communication with the second connection channel 1212 after the gas stove is switched from grade 4 to grade 5. Based on this, the inventors of the present invention propose that, when the first connection channel 1211 does not communicate with the first gas outlet 1121 (the outer ring burner), and the multiple second connection channels 1212 successively communicate with the second gas outlet 1122 (the inner ring burner), the size of each second connection channel 1212 needs to be increased, and the multiple second connection channels 1212 are successively arranged in a size descending order, as shown in FIG. 12. The structure of the used rotating disk is shown in FIG. 11. In this way, the sudden drop of the gas flow can be avoided when a switch is performed between two grades of the inner ring burner in work while the outer ring burner is not working, thereby implementing even reduction of the gas flow at the grades in FIG. 13. The even reduction herein does not strictly require a difference between the total gas flow at the first gas outlet 1121 and the total gas flow at the second gas outlet 1122 corresponding to each grade to be a fixed valve, as long as the difference fluctuates within a certain range, such as 8% to 10%, around a reference value.

It can be understood that, in the gas regulating valve provided in Embodiments 1, 2, and 3, when the rotating disk 12 rotates in one direction, the communication degree between the gas outlet and the inner cavity can be evenly increased or evenly decreased through controlling the rotation angle, implementing segmented control over the gas flow in an even manner or a roughly even manner (in the specific implementation procedure, segments respectively correspond to the multiple grades).

Similar to Embodiment 1, this embodiment also provides an electrically controlled gas regulating valve. If the motor 15 is replaced by a knob, the gas regulating valve can be manually controlled.

In addition to the electrically controlled gas regulating valve described above, this embodiment further provides a gas stove, which includes the electrically controlled gas regulating valve or the gas regulating valve manually controlled by the user described in this embodiment.

To sum up, compared with the prior art, the present invention has the following advantages:
(1) The rotating disk 12 is pressed flat on the surface of the inner cavity of the valve body 11, so that the inner cavity of the valve body 11 in communication with the gas inlet 111 is spaced from the gas outlet. The inner cavity selectively communicates with the gas outlet through the connection channel 121 provided on the rotating disk 12. When the rotating disk 12 rotates relative to the surface of the inner cavity of the valve body 11, the connection channel 121 may not align with, partially align with, or completely align with the gas outlet, implementing segmented control over the gas flow at the gas outlet.
(2) Two gas outputs exist, which are respectively a first gas outlet 1121 and a second gas outlet 1122 with different distances to the rotation center of the rotating disk 12. Correspondingly, two connection channels 121 exist, which are respectively a first connection channel 1211 corresponding to the first gas outlet 1121 and a second connection channel 1212 corresponding to the second gas outlet 1122. When the two gas outlets 1121 and 1122 are, for example, an outer ring burner gas outlet and an inner ring burner gas outlet, different communication degrees between the two gas outlets 1121 and 1122 and the two connection channels 1211 and 1212 may form multiple combinations, so as to control the gas flow at multiple grades.
(3) The valve body 11 is further provided with a minimum burner gas inlet 1123 in communication with the second gas outlet 1122. The rotating disk 12 is further provided with a third connection channel 1213 corresponding to the minimum burner gas inlet 1123; and when the third connection channel 1213 communicates with the minimum burner gas inlet 1123, neither first gas outlet 1121 nor second gas outlet 1122 communicates with the inner cavity of the valve body 11, so as to meet a demand for small fire when the gas stove is in use.
(4) The third connection channel 1213 and the first connection channel 1211 are both holes, a distance from the rotation center of the rotating disk 12 to the first gas outlet 1121 is equal to that to the minimum burner gas inlet 1123, and the first connection channel 1211 serves as the third connection channel 1213, so that the number of holes to be opened on the rotating disk 12 is reduced and that neither first gas outlet 1121 nor second gas outlet 1122 communicates with the inner cavity of the valve body 11 when the third connection channel 1213 communicates with the minimum burner gas inlet 1123.
(5) The valve body 11 is further provided with a flow regulating device, which is capable of selectively connecting or disconnecting the second gas outlet 1122 and the minimum burner gas inlet 1123 or changing a communication degree therebetween, so that the gas stove can achieve minimum fire with different gas sources.
(6) The communication degree between the first gas outlet 1121 and the inner cavity, and the communication degree between the second gas outlet 1122 and the inner cavity are described as follows: when the rotating disk 12 rotates in one direction, the multiple first connection channels 1211 with descending sizes successively communicate with the first gas outlet 1121. Then, the first connection channels 1211 do not communicate with the first gas outlet 1121, and the multiple second connection channels 1212 with descending sizes successively communicate with the second gas outlet 1122, thereby improving the precision degree segmented control the gas flow of the gas stove at multiple grades.

## Claims

1. A gas regulating valve for a gas stove, comprising:
a valve body (11), having an inner cavity and provided with a gas inlet (111) and a first gas outlet (1121) and a second gas outlet (1122);
a rotating disk (12), in plane contact with a surface of the inner cavity of the valve body (11) and capable of rotating relative to the surface of the inner cavity of the valve body (11), wherein a contact surface of the rotating disk (12) and that of the valve body (11) are fitted in a sealed manner; and the rotating disk (12) has a first, second and third connection channel (121) capable of selectively connecting or disconnecting the gas outlet on the valve body (11) and the inner cavity of the valve body (11) or changing a communication degree therebetween when the rotating disk rotates;
a rotating shaft (122) for driving the rotating disk (12) to rotate;
an elastic element (18) for pressing the rotating disk (12) flat on the surface of the inner cavity of the valve body (11), and the elastic element (18) is sleeved on the rotating shaft (122); and
a thrust bearing (22) adhered to the rotating disk (12), and the thrust bearing (22) is sleeved on a terminal of the rotating shaft (122) and leans against one end of the elastic element (18),
wherein the first gas outlet (1121) and the second gas outlet (1122) are positioned at different distances to a rotation center of the rotating disk (12), and the connection channel (121) comprises a first connection channel (1211) corresponding to the first gas outlet (1121) and a second connection channel (1212) corresponding to the second gas outlet (1122), and
wherein the valve body (11) is further provided with a minimum burner gas inlet (1123) adapted to be in communication with the second gas outlet (1122), the third connection channel (1213) corresponds to the minimum burner gas inlet (1123), and when the third connection channel (1213) communicates with the minimum burner gas inlet (1123), neither first gas outlet (1121) nor second gas outlet (1122) communicates with the inner cavity of the valve body (11).

2. The gas regulating valve for a gas stove according to claim 1, **characterized in that**, the size of the second gas outlet (1122) is smaller than that of the first gas outlet (1121).

3. The gas regulating valve for a gas stove according to claim 1, **characterized in that**, a distance from the rotation center of the rotating disk (12) to the first gas outlet (1121) is equal to that to the minimum burner gas inlet (1123), and the third connection channel (1213) is the first connection channel (1211).

4. The gas regulating valve for a gas stove according to claim 1, **characterized in that**, a flow regulating device is further disposed on the valve body (11), the flow regulating valve being capable of selectively connecting or disconnecting the second gas outlet (1122) and the minimum burner gas inlet (1123) or changing a communication degree therebetween.

5. The gas regulating valve for a gas stove according to claim 4, **characterized in that**, the flow regulating device is a screw (13), a channel for receiving the screw (13) intersects the minimum burner gas inlet (1123), a communication hole (131) is provided on the screw (13), and when the third connection channel (1213) communicates with the minimum burner gas inlet (1123), gas flows toward the second gas outlet (1122) through the communication hole (131).

6. The gas regulating valve for a gas stove according to claim 5, further comprising a first seal ring (14), disposed on the channel for receiving the screw (13) and a mounting face of the screw (13).

7. The gas regulating valve for a gas stove according to any one of claims 1 to 6, **characterized in that**, at least two first connection channels (1211) with different sizes are provided and are arranged in a size descending order or a size ascending order along a rotation direction of the rotating disk (12), and at least two second connection channels (1212) are also provided.

8. The gas regulating valve for a gas stove according to claim 7, **characterized in that**, the first connection channels (1211) and the second connection channels (1212) are arranged such that when the rotating disk (12) rotates in one direction, corresponding to successive grades, a total of communication degrees between the first gas outlet (1121) and the inner cavity and between the second gas outlet (1122) and the inner cavity are increased evenly or decreased evenly.

9. The gas regulating valve for a gas stove according to claim 8, **characterized in that**, the communication degree between the first gas outlet (1121) and the inner cavity, and the communication degree between the second gas outlet (1122) and the inner cavity are as follows: when the rotating disk (12) rotates in one direction, the multiple first connection channels (1211) with descending sizes successively communicate with the first gas outlet (1211); then, the first connection channels (1211) do not communicate with the first gas outlet (1121), and the multiple second connection channels (1212) with descending sizes successively communicate with the second gas outlet (1121).

10. The gas regulating valve for a gas stove according to claim 1, **characterized in that**, the connection channel (121) is a hole in any one of the following shapes: a circle, an ellipse, a rhombus, a rectangle, and a regular polygon.

11. The gas regulating valve for a gas stove according to claim 1, **characterized in that**, when the rotating disk (12) rotates in one direction, communication degrees between the gas outlet and the inner cavity are increased evenly or decreased evenly corresponding to successive grades.

12. The gas regulating valve for a gas stove according to claim 1, **characterized in that**, the valve body (11) comprises a top cover (113) and a valve main body, the top cover (113) and the valve main body form a sealed cavity, and the gas inlet (111) is provided on the top cover (113).

13. The gas regulating valve for a gas stove according to claim 12, further comprising: a second seal ring (20) disposed on the top cover (113) and a mounting face of the valve body (11).

14. A gas stove, comprising the gas regulating valve for a gas stove according to any one of claims 1 to 13.

15. An electrically controlled gas regulating valve for a gas stove, comprising:
the gas regulating valve for a gas stove according to any one of claims 1 to 13; and
a motor (15) for driving the rotating disk (12).

16. The electrically controlled gas regulating valve for a gas stove according to claim 15, **characterized in that**, the motor (15) is provided with a motor output shaft (151), an edge of the rotating disk (12) is provided with teeth, the motor output shaft (151) is connected to a gear, and the gear is engaged with the teeth at the edge of the rotating disk (12).

17. A gas stove, comprising the electrically controlled gas regulating valve for a gas stove according to claim 15 or 16.

## Patentansprüche

1. Gasregulierventil für einen Gasherd, das Folgendes umfasst:
einen Ventilkörper (11), der einen Innenhohlraum aufweist, mit einem Gaseinlass (111) und einem ersten Gasauslass (1121) und einem zweiten Gasauslass (1122),
eine Drehscheibe (12), die sich mit einer Fläche des Innenhohlraums des Ventilkörpers (11) in Flächenkontakt befindet und in der Lage ist, sich in Bezug zur Fläche des Innenhohlraums des Ventilkörpers (11) zu drehen, wobei eine Kontaktfläche der Drehscheibe (12) und die des Ventilkörpers (11) auf dichte Weise eingepasst sind, und wobei die Drehscheibe (12) einen ersten, einen zweiten und einen dritten Verbindungskanal (121) aufweist, die in der Lage sind, den Gasauslass am Ventilkörper (11) gezielt mit dem Innenhohlraum des Ventilkörpers (11) zu verbinden oder davon zu trennen oder einen Verbindungsgrad dazwischen zu ändern, wenn sich die Drehscheibe dreht,
eine drehbare Welle (122), die die Drehscheibe (12) in Drehung versetzen kann,
ein elastisches Element (18) zum flachen Andrücken der Drehscheibe (12) an der Fläche des Innenhohlraums des Ventilkörpers (11), das auf die drehbare Welle (122) gesteckt ist, und ein an der Drehscheibe (12) angebrachtes Axiallager (22), das auf ein Anschlussteil der drehbaren Welle (122) gesteckt ist und an einem Ende des elastischen Elements (18) anliegt, wobei der erste Gasauslass (1121) und der zweite Gasauslass (1122) in verschiedenen Abständen zu einem Drehzentrum der Drehscheibe (12) angeordnet sind und der Verbindungskanal (121) einen dem ersten Gasauslass (1121) entsprechenden ersten Verbindungskanal (1211) und einen dem zweiten Gasauslass (1122) entsprechenden zweiten Verbindungskanal (1212) umfasst und
wobei der Ventilkörper (11) ferner mit einem Mindestbrennergaseinlass (1123) versehen ist, der so ausgelegt ist, dass er mit dem zweiten Gasauslass (1122) verbunden ist, wobei der dritte Verbindungskanal (1213) dem Mindestbrennergaseinlass (1123) entspricht und, wenn der dritte Verbindungskanal (1213) mit dem Mindestbrennergaseinlass (1123) verbunden ist, weder der erste Gasauslass (1121) noch der zweite Gasauslass (1122) mit dem Innenhohlraum des Ventilkörpers (11) verbunden ist.

2. Gasregulierventil für einen Gasherd nach Anspruch 1,
**dadurch gekennzeichnet, dass** der zweite Gasauslass (1122) kleiner ist als der erste Gasauslass (1121).

3. Gasregulierventil für einen Gasherd nach Anspruch 1,
**dadurch gekennzeichnet, dass** ein Abstand vom Drehzentrum der Drehscheibe (12) zum ersten Gasauslass (1121) dem zum Mindestbrennergaseinlass (1123) entspricht und es sich bei dem dritten Verbindungskanal (1213) um den ersten Verbindungskanal (1211) handelt.

4. Gasregulierventil für einen Gasherd nach Anspruch 1,
**dadurch gekennzeichnet, dass** ferner eine Durchflussreguliervorrichtung an dem Ventilkörper (11) angeordnet ist, wobei das Durchflussregulierventil in der Lage ist, den zweiten Gasauslass (1122) und den Mindestbrennergaseinlass (1123) gezielt zu verbinden oder zu trennen oder einen Verbindungsgrad dazwischen zu ändern.

5. Gasregulierventil für einen Gasherd nach Anspruch 4,
**dadurch gekennzeichnet, dass** es sich bei der Durchflussreguliervorrichtung um eine Schraube (13) handelt, ein Kanal zum Aufnehmen der Schraube (13) den Mindestbrennergaseinlass (1123) schneidet, an der Schraube (13) eine Verbindungsöffnung (131) vorgesehen ist und, wenn der dritte Verbindungskanal (1213) mit dem Mindestbrennergaseinlass (1123) verbunden ist, Gas durch die Verbindungsöffnung (131) zum zweiten Gasauslass (1122) strömt.

6. Gasregulierventil für einen Gasherd nach Anspruch 5,
das ferner einen ersten Dichtungsring (14) umfasst, der an dem Kanal zum Aufnehmen der Schraube (13) und einer Befestigungsfläche der Schraube (13) angeordnet ist.

7. Gasregulierventil für einen Gasherd nach einem der Ansprüche 1 bis 6,
**dadurch gekennzeichnet, dass** mindestens zwei erste Verbindungskanäle (1211) von unterschiedlicher Größe vorgesehen sind und deren Größe in einer Drehrichtung der Drehscheibe (12) abnimmt oder zunimmt und zudem mindestens zwei zweite Verbindungskanäle (1212) vorgesehen sind.

8. Gasregulierventil für einen Gasherd nach Anspruch 7,
**dadurch gekennzeichnet, dass** die ersten Verbindungskanäle (1211) und die zweiten Verbindungskanäle (1212) so angeordnet sind, dass sich, wenn sich die Drehscheibe (12) in eine Richtung dreht, ein Gesamtwert für den Verbindungsgrad zwischen dem ersten Gasauslass (1121) und dem Innenhohlraum und zwischen dem zweiten Gasauslass (1122) und dem Innenhohlraum aufeinanderfolgenden Graden entsprechend gleichmäßig erhöht oder gleichmäßig verringert.

9. Gasregulierventil für einen Gasherd nach Anspruch 8,
**dadurch gekennzeichnet, dass** der Verbindungsgrad zwischen dem ersten Gasauslass (1121) und dem Innenhohlraum und der Verbindungsgrad zwischen dem zweiten Gasauslass (1122) und dem Innenhohlraum Folgendem entsprechen: wenn sich die Drehscheibe (12) in eine Richtung dreht, sind die mehreren ersten Verbindungskanäle (1211) von abnehmender Größe nacheinander mit dem ersten Gasauslass (1211) verbunden, dann sind die ersten Verbindungskanäle (1211) nicht mit dem ersten Gasauslass (1121) und die mehreren zweiten Verbindungskanäle (1212) von abnehmender Größe nacheinander mit dem zweiten Gasauslass (1121) verbunden.

10. Gasregulierventil für einen Gasherd nach Anspruch 1,
**dadurch gekennzeichnet, dass** es sich bei dem Verbindungskanal (121) um eine Öffnung von einer der folgenden Formen handelt: Kreis, Ellipse, Rhombus, Rechteck und regelmäßiges Vieleck.

11. Gasregulierventil für einen Gasherd nach Anspruch 1,
**dadurch gekennzeichnet, dass** sich der Verbindungsgrad zwischen dem Gasauslass und dem Innenhohlraum, wenn sich die Drehscheibe (12) in eine Richtung dreht, aufeinanderfolgenden Graden entsprechend gleichmäßig erhöht oder gleichmäßig verringert.

12. Gasregulierventil für einen Gasherd nach Anspruch 1,
**dadurch gekennzeichnet, dass** der Ventilkörper (11) eine obere Abdeckung (113) und einen Ventilhauptkörper umfasst, die obere Abdeckung (113) und der Ventilhauptkörper einen abgedichteten Hohlraum bilden und der Gaseinlass (111) an der oberen Abdeckung (113) vorgesehen ist.

13. Gasregulierventil für einen Gasherd nach Anspruch 12, das ferner einen an der oberen Abdeckung (113) und einer Befestigungsfläche des Ventilkörpers (11) angeordneten, zweiten Dichtungsring (20) umfasst.

14. Gasherd mit dem Gasregulierventil für einen Gasherd nach einem der Ansprüche 1 bis 13.

15. Elektrisch geregeltes Gasregulierventil für einen Gasherd, das Folgendes umfasst:
das Gasregulierventil für einen Gasherd nach einem der Ansprüche 1 bis 13 und
einen Motor (15) zum Antreiben der Drehscheibe (12).

16. Elektrisch geregeltes Gasregulierventil für einen Gasherd nach Anspruch 15, **dadurch gekennzeichnet, dass** der Motor (15) mit einer Motorabtriebswelle (151) versehen, ein Rand der Drehscheibe (12) mit Zähnen versehen, die Motorabtriebswelle (151) mit einem Getriebe verbunden ist und das Getriebe in die Zähne am Rand der Drehscheibe (12) greift.

17. Gasherd mit dem elektrisch geregelten Gasregulierventil für einen Gasherd nach einem der Ansprüche 15 bis 16.

## Revendications

1. Vanne de régulation de gaz pour une cuisinière à gaz, comprenant :
un corps de vanne (11), ayant une cavité interne et pourvu d'un orifice d'entrée de gaz (111) et d'un premier orifice de sortie de gaz (1121) et d'un second orifice de sortie de gaz (1122);
un disque rotatif (12), en contact plan avec une surface de la cavité interne du corps de vanne (11) et capable de tourner par rapport à la surface de la cavité interne du corps de vanne (11), dans lequel une surface de contact du disque rotatif (12) et celle du corps de vanne (11) sont installées d'une manière étanche ; et le disque rotatif (12) a un premier, un deuxième et un troisième canal de branchement (121) capables de brancher ou débrancher sélectivement l'orifice de sortie de gaz sur le corps de vanne (11) et la cavité interne du corps de vanne (11) ou de changer un degré de communication entre eux lorsque le disque rotatif tourne ;
un arbre rotatif (122) pour entraîner le disque rotatif (12) en rotation ;
un élément élastique (18) pour enfoncer le disque rotatif (12) à plat sur la surface de la cavité interne du corps de vanne (11), et l'élément élastique (18) est emmanché sur l'arbre rotatif (122) ; et
un palier de butée (22) collé au disque rotatif (12), et le palier de butée (22) est emmanché sur une extrémité terminale de l'arbre rotatif (122) et appuie contre une extrémité de l'élément élastique (18),
dans lequel le premier orifice de sortie de gaz (1121) et le second orifice de sortie de gaz (1122) sont positionnés à des distances différentes d'un centre de rotation du disque rotatif (12), et le canal de branchement (121) comprend un premier canal de branchement (1211) correspondant au premier orifice de sortie de gaz (1121) et un deuxième canal de branchement (1212) correspondant au second orifice de sortie de gaz (1122), et
dans lequel le corps de vanne (11) est en outre pourvu d'un orifice d'entrée de gaz de brûleur minimal (1123) adapté pour être en communication avec le second orifice de sortie de gaz (1122),
le troisième canal de branchement (1213) correspond à l'orifice d'entrée de gaz de brûleur minimal (1123), et lorsque le troisième canal de branchement (1213) communique avec l'orifice d'entrée de gaz de brûleur minimal (1123), ni le premier orifice de sortie de gaz (1121), ni le second orifice de sortie de gaz (1122) ne communique avec la cavité interne du corps de vanne (11).

2. Vanne de régulation de gaz pour une cuisinière à gaz selon la revendication 1, **caractérisée en ce que** la taille du second orifice de sortie de gaz (1122) est plus petite que celle du premier orifice de sortie de gaz (1121).

3. Vanne de régulation de gaz pour une cuisinière à gaz selon la revendication 1, **caractérisée en ce qu'**une distance allant centre de rotation du disque rotatif (12) jusqu'au premier orifice de sortie de gaz (1121) est égale à celle jusqu'à l'orifice d'entrée de gaz de brûleur minimal (1123), et le troisième canal de branchement (1213) est le premier canal de branchement (1211).

4. Vanne de régulation de gaz pour une cuisinière à gaz selon la revendication 1, **caractérisée en ce qu'**un dispositif de régulation d'écoulement est en outre disposé sur le corps de vanne (11), la vanne de régulation d'écoulement étant capable de brancher ou de débrancher sélectivement le second orifice de sortie de gaz (1122) et l'orifice d'entrée de gaz de brûleur minimal (1123) ou de changer un degré de communication entre eux.

5. Vanne de régulation de gaz pour une cuisinière à gaz selon la revendication 4, **caractérisée en ce que** le dispositif de régulation d'écoulement est une vis (13), un canal pour recevoir la vis (13) coupe l'orifice d'entrée de gaz de brûleur minimal (1123), un trou de communication (131) est prévu sur la vis (13), et lorsque le troisième canal de branchement (1213) communique avec l'orifice d'entrée de gaz de brûleur minimal (1123), du gaz s'écoule vers le second orifice de sortie de gaz (1122) à travers le trou de communication (131).

6. Vanne de régulation de gaz pour une cuisinière à gaz selon la revendication 5, comprenant en outre une première bague d'étanchéité (14), disposée sur le canal pour recevoir la vis (13) et une face de montage de la vis (13).

7. Vanne de régulation de gaz pour une cuisinière à gaz selon l'une quelconque des revendications 1 à 6, **caractérisée en ce qu'**au moins deux premiers canaux de branchement (1211) de tailles différentes sont prévus et sont agencés par ordre décroissant de taille ou par ordre croissant de taille suivant un sens de rotation du disque rotatif (12), et au moins deux deuxièmes canaux de branchement (1212) sont également prévus.

8. Vanne de régulation de gaz pour une cuisinière à gaz selon la revendication 7, **caractérisée en ce que** les premiers canaux de branchement (1211) et les deuxièmes canaux de branchement (1212) sont agencés de sorte que, lorsque le disque rotatif (12) tourne dans un sens correspondant à des grades successifs, un total de degrés de communication entre le premier orifice de sortie de gaz (1121) et la cavité interne et entre le second orifice de sortie de gaz (1122) et la cavité interne est augmenté uniformément ou diminué uniformément.

9. Vanne de régulation de gaz pour une cuisinière à gaz selon la revendication 8, **caractérisée en ce que** le degré de communication entre le premier orifice de sortie de gaz (1121) et la cavité interne, et le degré de communication entre le second orifice de sortie de gaz (1122) et la cavité interne sont comme suit : lorsque le disque rotatif (12) tourne dans un sens, les multiples premiers canaux de branchement (1211) de tailles décroissantes communiquent successivement avec le premier orifice de sortie de gaz (1211) ; puis, les premiers canaux de branchement (1211) ne communiquent pas avec le premier orifice de sortie de gaz (1121), et les multiples deuxièmes canaux de branchement (1212) de tailles décroissantes communiquent successivement avec le second orifice de sortie de gaz (1121).

10. Vanne de régulation de gaz pour une cuisinière à gaz selon la revendication 1, **caractérisée en ce que** le canal de branchement (121) est un trou de l'une quelconque des formes suivantes : un cercle, une ellipse, un losange, un rectangle, et un polygone régulier.

11. Vanne de régulation de gaz pour une cuisinière à gaz selon la revendication 1, **caractérisée en ce que**, lorsque le disque rotatif (12) tourne dans un sens, des degrés de communication entre l'orifice de sortie de gaz et la cavité interne sont augmentés uniformément ou diminués uniformément correspondant à des grades successifs.

12. Vanne de régulation de gaz pour une cuisinière à gaz selon la revendication 1, **caractérisée en ce que** le corps de vanne (11) comprend un couvercle supérieur (113) et un corps principal de vanne, le couvercle supérieur (113) et le corps principal de vanne forment une cavité étanche, et l'orifice d'entrée de gaz (111) est prévu sur le couvercle supérieur (113).

13. Vanne de régulation de gaz pour une cuisinière à gaz selon la revendication 12, comprenant en outre : une seconde bague d'étanchéité (20) disposée sur le couvercle supérieur (113) et une face de montage du corps de vanne (11).

14. Cuisinière à gaz, comprenant la vanne de régulation de gaz pour une cuisinière à gaz selon l'une quelconque des revendications 1 à 13.

15. Vanne de régulation de gaz à commande électrique pour une cuisinière à gaz, comprenant :
la vanne de régulation de gaz pour une cuisinière à gaz selon l'une quelconque des revendications 1 à 13 ; et
un moteur (15) pour entraîner le disque rotatif (12).

16. Vanne de régulation de gaz à commande électrique pour une cuisinière à gaz selon la revendication 15, **caractérisée en ce que** le moteur (15) est pourvu d'un arbre de sortie de moteur (151), un bord du disque rotatif (12) est pourvu de dents, l'arbre de sortie de moteur (151) est raccordé à un pignon, et le pignon est engrené avec les dents au niveau du bord du disque rotatif (12).

17. Cuisinière à gaz, comprenant la vanne de régulation de gaz à commande électrique pour une cuisinière à gaz selon la revendication 15 ou 16.
